# EUROPEAN PATENT SPECIFICATION

(11) **EP 2 324 073 B1**
(45) Date of publication and mention of the grant of the patent: **28.03.2018**
(21) Application number: 09791861.9
(22) Date of filing: 25.08.2009
(51) Int. Cl.: C08G 63/00, C08G 63/08, C09D 167/04, C08G 18/62, C08J 7/04, C09D 175/06, C08G 18/42, C08L 61/28

(54) **COATING COMPOSITIONS AND COATINGS COMPRISING LACTIDE**
BESCHICHTUNGSZUSAMMENSETZUNGEN UND ÜBERZÜGE, UMFASSEND LACTID
COMPOSITIONS DE REVÊTEMENT ET REVÊTEMENTS COMPRENANT UN LACTIDE

(30) Priority: 02.09.2008 US 202801; 02.09.2008 US 202755
(43) Date of publication of application: 25.05.2011
(73) Proprietor: PPG Industries Ohio, Inc., Cleveland, OH 44111 (US)
(72) Inventor: KULFAN, Jackie, L., Valencia US 16059 (US); FENN, David, R., Allison Park Pennsylvania 15101 (US)
(74) Representative: f & e patent
(86) International application number: PCT/US2009/054828
(87) International publication number: WO 2010/027758

(56) References cited:
- WO-A1-99/50345
- WO-A1-2008/029527
- US-A- 5 270 400
- DATABASE WPI Week 200341 Thomson Scientific, London, GB; AN 2003-433077 XP002561866 & JP 2002 348366 A (TOYOBO KK) 4 December 2002 (2002-12-04)
- DATABASE WPI Week 199625 Thomson Scientific, London, GB; AN 1996-247000 XP002561867 & JP 08 100057 A (DAINIPPON INK & CHEM INC) 16 April 1996 (1996-04-16)

## Description

### FIELD OF THE INVENTION

The present invention relates generally to coating compositions comprising a) the reaction product of a compound containing two or more active hydrogen containing groups and a lactide and optionally b) a crosslinker and to substrates at least partially coated with a coating deposited from a coating composition of the present invention.

### BACKGROUND OF THE INVENTION

An increase in demand for environmentally friendly products has made "green" coating compositions, particularly biodegradable coatings, of interest in numerous industries. This is particularly relevant in the consumer electronics industry, where an increasing number of cellular telephones, PDAs, MP3s, and the like are finding their way to landfills. Biodegradable coatings, particularly with biodegradable plastics used in the housings of those devices, are desirable.

EP 2065421 discloses a method for the preparation of a star-branched polyester polyol by polymerizing lactate or lactic acid using as an initiator a fat and oil composed mainly of a triacylglycerol that has at least three hydroxyl or epoxy groups in its molecule.

### SUMMARY OF THE INVENTION

The present invention is directed to a coating composition comprising
a) the reaction product of:
   i) a compound containing two or more active hydrogen groups comprising a polyol , wherein the polyol comprises a biomass derived polyol having a hydroxyl value of 20 to 400 or soy polyol ; and
   ii) a lactide; and
b) a crosslinker, wherein the crosslinker is present in the coating composition in an amount of 5 to 60 weight %, based on total solids weight of the coating.

In one embodiment of the present invention the ratio by weight of active hydrogen containing compound to lactide is 1:>10 to 1:10,000. In another embodiment of present invention the compound containing two or more active hydrogen groups may comprise a biomass derived polyol.

### DETAILED DESCRIPTION OF THE INVENTION

The present invention is directed to coating compositions comprising the reaction product of a compound containing two or more active hydrogen groups comprising a polyol , wherein the polyol comprises a biomass derived polyol having a hydroxyl value of 20 to 400 or soy polyol ; and
a lactide; this is sometimes referred to herein as the "lactide reaction product", "reaction product" and like terms. A "crosslinked" coating is one in which at least some functional groups of one component react with at least some functional groups of another component when subjected to conditions that allow for and/or facilitate such reaction or "cure" (such as mixing, heating, and the like). As used herein, a "crosslinked" coating includes a "crosslinkable" coating; that is, a coating that will be crosslinked when subjected to the appropriate conditions.

It will be appreciated that the coating compositions described herein can be either one component ("1K"), or multi-component compositions, such as two component ("2K") compositions. A 1K composition will be understood as referring to a composition wherein all the coating components are maintained in the same container after manufacture, during storage, etc. A 1K coating composition can be applied to a substrate and cured by any conventional means, such as by heating, forced air, and the like. The present coating compositions can also be 2K coating compositions or multi-component coating compositions, which will be understood as coatings in which various components are maintained separately until just prior to application.

As noted above, the coating compositions of the present invention comprise the reaction product of a compound containing two or more active hydrogen groups comprising a polyol , wherein the polyol comprises a biomass derived polyol having a hydroxyl value of 20 to 400 or soy polyol and a lactide. It will be appreciated by those skilled in the art that said compounds containing two or more active hydrogen groups will react with the lactide to form a compound containing poly(lactic acid) units.

Suitable polyols are widely commercially available. Particularly suitable polyols have a number average molecular weight as determined by GPC of 500 to 100,000, such as 500 to 10,000. In certain embodiments, the polyol can have a hydroxyl value of 20 to 400, such as 40 to 300 or 120 to 350. In other embodiments the hydroxyl value can range from 1200 to 2100, such as 1400 to 1900.

According to the present invention, at least some of the polyol is biomass derived. These polyols can be derived from natural oils such as castor oil, peanut oil, soy bean oil or canola oil. A biomass derived polyol or "biobased polyol" is any polyol that is derived directly from biomass or that is prepared from one or more biomass derived compounds. The hydroxyl groups present in the biomass derived polyols can be naturally occurring or they can be introduced, for example, by modification of carbon-carbon double bonds present in the oils. Suitable biobased polyols can have a number average molecular weight as determined by GPC ("Mn") of 500 to 100,000, such as 500 to 10,000. According to the present invention, the biomass derived polyol has a hydroxyl value of 20 to 400, such as 40 to 300, or 120 to 350. Natural oil derived polyols are described in United States Patent Application Publication Number 2006/0041156 A1, United States Patent Number 7,084,230, WO 2004/096882 A1, United States Patent Number 6,686,435, United States Patent Number 6,107,433, United States Patent Number 6,573,354 and United States Patent Number 6,433,121. Methods of modifying carbon-carbon double bonds to introduce hydroxyl groups include treatment with ozone, air oxidation, reaction with peroxides or hydroformylation (as described in "Polyols and Polyurethanes from Hydroformylation of Soybean Oil", Journal of Polymers and the Environment, Volume 10, Numbers 1-2 , pages 49-52, April, 2002). A particularly suitable biomass derived polyol is a soy polyol. Soy polyols are commercially available from Cargill Inc., Urethane Soy Systems Co. and BioBased Technologies. In certain other embodiments, the polyol is derived from a recycled polymer, such as a polyester, of which polyethylene terephthalate ("PET") is an example. Biomass derived polyols can be obtained by reacting recycled PET with polyols, for example soy polyol and glycerol, under conditions that lead to transesterification.

When soy polyols and other biomass derived polyols are used in coatings, such coatings tend to have reduced hardness, solvent resistance, resistance to chemicals, for example those found in skin lotions, sun protection creams and insect repellents and/or degradation of other properties as compared to coatings having petroleum based polyols. This is believed to be due to the low glass transition temperature ("Tg") and the low reactivity of the secondary hydroxyl groups present in such polyols. The present inventors have discovered that the reaction product obtained by reacting a biomass derived polyol with a lactide provides improved properties when used in coatings, as compared to use in coatings of unmodified biomass derived polyols.

Any suitable lactide can be used according to the present invention, such as L-lactide, meso-lactide or D-lactide. Mixtures of any of the isomers can also be used. Lactide is the cyclic diester of lactic acid (2-hydroxypropionic acid). Suitable lactides are also commercially available.

As noted above, in certain embodiments at least some of the active hydrogen containing compound is biomass derived; in certain other embodiments at least some of the lactide is biomass derived, and in yet certain other embodiments at least some of each are biomass derived. A biomass derived compound will be understood to be a compound derived from a living or recently living organism, for example, plants (including trees) or animals and not from a petroleum based source. In certain embodiments, the reaction product of an active hydrogen containing compound and a lactide comprises 40 weight % or greater biomass derived material, such as 60 weight % or greater, 80 weight % or greater, or 90 weight % or greater, based on total solid weight. It will be appreciated that the lactide reaction product can also contain any amount of non-biomass derived material, such as petroleum derived material.

The reaction between the lactide and the active hydrogen containing compound can be carried out under any suitable conditions. For example, the active hydrogen containing compound and lactide can be mixed and heated to a temperature of 100 - 200°C, such as 120 - 150°C, for a period of two to ten hours. The reaction can be carried out in the presence of a catalyst, for example complexes of tin, aluminum, zinc and lanthanides. Tin compounds such as tin(II) 2-ethylhexanoate are particularly suitable. The reaction can be carried out in bulk or in the presence of solvent(s).

The molar ratio of active hydrogen containing groups to lactide can be 1:0.1 to 1:10, such as 1:0.2 to 1:6, or 1:0.5 to 1:3. In certain other embodiments, the weight ratio of active hydrogen containing compound to lactide is 10:1 to 1:10, such as 5:1 to 1:6 or 2:1 to 1:4.

In certain embodiments, the active hydrogen containing compound can be reacted with lactide and one or more other cyclic monomers, such as caprolactone. These reactions can be carried out simultaneously, or in sequence.

The reaction product of a compound containing two or more active hydrogen groups and a lactide can have a hydroxyl value of 20 to 400, such as 40 to 350, or 80 to 220. The reaction product of a compound containing two or more active hydrogen groups and a lactide can have a number average molecular weight, as determined by GPC ("Mn"), of 500 to 100,000, such as 750 to 10,000, or 1000 to 7500.

It has been surprisingly discovered that coatings deposited from coating composition of the present invention may be biodegradable. A biodegradable composition will be understood as one in which the organic substances that comprise the composition are broken down by living organisms, such as in the presence of oxygen (aerobically) or without oxygen (anaerobically). Certain compositions of the current invention can be biodegradable under aerobic conditions, such as industrial or domestic composting. Generally, the rate of biodegradation of a composition under specific conditions increases as the content of poly(lactic acid) units increases. In certain embodiments, the coating compositions of the present invention comprise at least 20% poly(lactic acid) units by weight, such as at least 32 weight %, or at least 38 weight %, with weight % based on total solid weight of the coating. When the active hydrogen containing compound is a biobased polyol, the coatings of the present invention can comprise 5 weight % or greater poly(lactic acid) units derived from lactide, such as 10 weight % or greater, or 30 weight % or greater, with weight % based on total solid weight.

The coating compositions of the current invention also comprise a crosslinker that is reactive with the lactide reaction product. Examples include polyisocyanates and aminoplasts. The coating compositions of the present invention comprise 5 to 60 weight %, such as 10 to 50, or 20 to 40 weight % of crosslinker, based on total solids weight of the coating.

Suitable polyisocyanates include multifunctional isocyanates. Examples of multifunctional polyisocyanates include aliphatic diisocyanates like hexamethylene diisocyanate and isophorone diisocyanate, and aromatic diisocyanates like toluene diisocyanate and 4,4'-diphenylmethane diisocyanate. The polyisocyanates can be blocked or unblocked. Examples of other suitable polyisocyanates include isocyanurate trimers, allophanates, and uretdiones of diisocyanates and polycarbodiimides such as those disclosed in United States Patent Application Serial Number 12/056,306 filed March 27, 2008. Suitable polyisocyanates are well known in the art and are widely available commercially. For example, suitable polyisocyanates are disclosed in United States Patent Number 6,316,119 at columns 6, lines 19-36. Examples of commercially available polyisocyanates include DESMODUR N3390, which is sold by Bayer Corporation, and TOLONATE HDT90, which is sold by Rhodia Inc.

Suitable aminoplasts include condensates of amines and or amides with aldehyde. For example, the condensate of melamine with formaldehyde is a suitable aminoplast. Suitable aminoplasts are well known in the art. A suitable aminoplast is disclosed, for example, in United States Patent Number 6,316,119 at column 5, lines 45-55.

In certain embodiments, the coating compositions of the present invention when made from biobased polyol are thermoplastic, while in other embodiments they are thermosetting. Thermosetting compositions may comprise components that crosslink with themselves, i.e. self-crosslinking, or may comprise a crosslinker that will react with the polyol/lactide, such as those described above.

In certain embodiments the coating compositions of the present invention are not radiation curable.

In certain embodiments, the coating compositions of the present invention can comprise ≥ 20 weight %, such as ≥ 40 weight %, or ≥ 60 weight %, based on total solids weight, of the lactide reaction product. The coating compositions of the present invention can comprise ≤ 95 weight %, such as ≤ 90 weight %, ≤ 85 weight %, ≤ 80 weight % or ≤ 70 weight % based on total solids weight, of the lactide reaction product. Any range within combinations of these numbers can be used according the present invention. In certain embodiments, 10% or greater, such as 20% or greater, or 50% or greater, of the carbon content of the coating composition originates directly from biomass.

It will be appreciated that the lactide reaction product used in the coating compositions according to the present invention can form all or part of the film-forming resin of the coating composition. In certain embodiments, one or more additional film-forming resins are also used in the coating. For example, the coating compositions can comprise any of a variety of thermoplastic and/or thermosetting compositions known in the art. The coating compositions may be water based or solvent based liquid compositions, or alternatively, may be in solid particulate form, i.e. a powder coating.

Thermosetting or curable coating compositions typically comprise film-forming polymers or resins having functional groups that are reactive with either themselves or a crosslinking agent. The additional film-forming resin can be selected from, for example, acrylic polymers, polyester polymers, polyurethane polymers, polyamide polymers, polyether polymers, polysiloxane polymers, copolymers thereof, and mixtures thereof. Generally these polymers can be any polymers of these types made by any method known to those skilled in the art. Such polymers may be solvent borne or water dispersible, emulsifiable, or of limited water solubility. The functional groups on the film-forming resin may be selected from any of a variety of reactive functional groups including, for example, carboxylic acid groups, amine groups, epoxide groups, hydroxyl groups, thiol groups, carbamate groups, amide groups, urea groups, isocyanate groups (including blocked isocyanate groups) mercaptan groups, and combinations thereof.

Appropriate mixtures of film-forming resins may also be used in the preparation of the present coating compositions.

Thermosetting coating compositions may be self-crosslinking or may comprise a crosslinking agent that may be selected from, for example, any of the aminoplasts or polyisocyanates listed above, polyepoxides, beta hydroxyalkylamides, polyacids, anhydrides, organometallic acid-functional materials, polyamines, polyamides, and mixtures of any of the foregoing. In certain embodiments, the present coatings comprise a thermosetting film-forming polymer or resin and a crosslinking agent therefor and the crosslinker is either the same as or different from the crosslinker that is used to crosslink the lactide reaction product. In certain other embodiments, a thermosetting film-forming polymer or resin having functional groups that are reactive with themselves are used; in this manner, such thermosetting coatings are self-crosslinking.

In a particularly suitable embodiment, the coating composition comprises one or more additional film-forming resins that comprise the reaction product of a polyol and lactide. The polyol can be a small molecule containing more than one hydroxyl group, for example neopentyl glycol or pentraerythritol, or it can be a polymeric polyol such as a polyester polyol or an acrylic polyol. Acrylic polyols are particularly suitable.

The ratio by weight of i) to ii) may be 1:>10 to 1:10 000, such as 1:>10 to 1:5000 or 1:50 to 1:4000. This lactide reaction product, sometimes referred to herein as the "excess lactide reaction product" and like terms, can be used alone or in conjunction with one or more additional film-forming resins such as those described above. The excess lactide reaction product can be used in an amount of 0.5 to 75, such as 1 to 60 or 2 to 40 weight % of the coating, or any combinations thereof, with weight % based on the total solids weight of the coating. It has been surprisingly discovered that the use of an excess lactide reaction product in a coating can result in improved adhesion, as compared to a coating lacking such a reaction product. Thus, the excess lactide reaction product can be used as in additive quantities in conventional coatings, or can comprise a relatively large amount of the coating and improved adhesion may be observed. The coating composition comprising the excess lactide reaction product may further comprise a crosslinking agent or may be without crosslinker. The active hydrogen compound and/or lactide used to form the excess lactide reaction product may or may not be biomass derived or can comprise a combination of biomass derived and non-biomass derived compounds. Any of the active hydrogen containing compounds and lactides described above can be used here.

The coating compositions of the present invention may also include a solvent and/or reactive diluent in one or more of the components. The coating composition can also be 100% solids. Suitable solvents include water, organic solvent(s) and/or mixtures thereof. Suitable organic solvents include glycols, glycol ether alcohols, alcohols, ketones, and aromatics, such as xylene and toluene, acetates, mineral spirits, naphthas and/or mixtures thereof. "Acetates" include the glycol ether acetates. The solvents can be biomass derived. Examples of biomass derived solvents include esters of lactic acid and esters of soybean oil fatty acid. In certain embodiments, the solvent is a non-aqueous solvent. "Non-aqueous solvent" and like terms means that less than 50 percent of the solvent is water. For example, less than 10 percent, or even less than 5 percent, of the solvent can be water. It will be understood that mixtures of solvents, including or excluding water in an amount of less than 50 percent, can constitute a "non-aqueous solvent". In other embodiments, the coating is aqueous or water-based. This means that 50% or more of the solvent is water. These embodiments have less than 50%, such as less than 20%, less than 10%, less than 5% or less than 2% solvent.

If desired, the coating compositions can comprise other optional materials well known in the art of formulating coatings in any of the components, such as colorants, plasticizers, abrasion resistant particles, anti-oxidants, hindered amine light stabilizers, UV light absorbers and stabilizers, surfactants, flow control agents, antifoaming agents, wetting agents, thixotropic agents, fillers, waxes, lubricants, fortifiers, stabilizers, organic cosolvents, reactive diluents, catalysts, grind vehicles, and other customary auxiliaries.

An "abrasion resistant particle" is one that, when used in a coating, will impart some level of abrasion resistance to the coating as compared with the same coating lacking the particles. Suitable abrasion resistant particles include organic and/or inorganic particles. Examples of suitable organic particles include but are not limited to diamond particles, such as diamond dust particles, and particles formed from carbide materials; examples of carbide particles include but are not limited to titanium carbide, silicon carbide and boron carbide. Examples of suitable inorganic particles, include but are not limited to silica; alumina; alumina silicate; silica alumina; alkali aluminosilicate; borosilicate glass; nitrides including boron nitride and silicon nitride; oxides including titanium dioxide and zinc oxide; quartz; nepheline syenite; zircon such as in the form of zirconium oxide; buddeluyite; and eudialyte. Particles of any size can be used, as can mixtures of different particles and/or different sized particles. For example, the particles can be microparticles, having an average particle size of 0.1 to 50, 0.1 to 20, 1 to 12, 1 to 10, or 3 to 6 microns, or any combination within any of these ranges. The particles can be nanoparticles, having an average particle size of less than 0.1 micron, such as 0.8 to 500, 10 to 100, or 100 to 500 nanometers, or any combination within these ranges.

As used herein, the term "colorant" means any substance that imparts color and/or other opacity and/or other visual effect to the composition. The colorant can be added to the coating in any suitable form, such as discrete particles, dispersions, solutions and/or flakes. A single colorant or a mixture of two or more colorants can be used in the coatings of the present invention.

Example colorants include pigments, dyes and tints, such as those used in the paint industry and/or listed in the Dry Color Manufacturers Association (DCMA), as well as special effect compositions. A colorant may include, for example, a finely divided solid powder that is insoluble but wettable under the conditions of use. A colorant can be organic or inorganic and can be agglomerated or non-agglomerated. Colorants can be incorporated into the coatings by grinding or simple mixing. Colorants can be incorporated by grinding into the coating by use of a grind vehicle, such as an acrylic grind vehicle, the use of which will be familiar to one skilled in the art.

Example pigments and/or pigment compositions include, but are not limited to, carbazole dioxazine crude pigment, azo, monoazo, disazo, naphthol AS, salt type (lakes), benzimidazolone, condensation, metal complex, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPPBO red"), titanium dioxide, carbon black, carbon fiber, graphite, other conductive pigments and/or fillers and mixtures thereof. The terms "pigment" and "colored filler" can be used interchangeably.

Example dyes include, but are not limited to, those that are solvent and/or aqueous based such as acid dyes, azoic dyes, basic dyes, direct dyes, disperse dyes, reactive dyes, solvent dyes, sulfur dyes, mordant dyes, for example, bismuth vanadate, anthraquinone, perylene aluminum, quinacridone, thiazole, thiazine, azo, indigoid, nitro, nitroso, oxazine, phthalocyanine, quinoline, stilbene, and triphenyl methane.

Example tints include, but are not limited to, pigments dispersed in water-based or water miscible carriers such as AQUA-CHEM 896 commercially available from Degussa, Inc., CHARISMA COLORANTS and MAXITONER INDUSTRIAL COLORANTS commercially available from Accurate Dispersions division of Eastman Chemicals, Inc.

As noted above, the colorant can be in the form of a dispersion including, but not limited to, a nanoparticle dispersion. Nanoparticle dispersions can include one or more highly dispersed nanoparticle colorants and/or colorant particles that produce a desired visible color and/or opacity and/or visual effect. Nanoparticle dispersions can include colorants such as pigments or dyes having a particle size of less than 150 nm, such as less than 70 nm, or less than 30 nm. Nanoparticles can be produced by milling stock organic or inorganic pigments with grinding media having a particle size of less than 0.5 mm. Example nanoparticle dispersions and methods for making them are identified in United States Patent Number 6,875,800 B2. Nanoparticle dispersions can also be produced by crystallization, precipitation, gas phase condensation, and chemical attrition (i.e., partial dissolution). In order to minimize re-agglomeration of nanoparticles within the coating, a dispersion of resin-coated nanoparticles can be used. As used herein, a "dispersion of resin-coated nanoparticles" refers to a continuous phase in which is dispersed discreet "composite microparticles" that comprise a nanoparticle and a resin coating on the nanoparticle. Example dispersions of resin-coated nanoparticles and methods for making them are identified in United States Patent Application Publication 2005-0287348 A1, United States Patent Application Publication Number 2005-0287348 A1, and United States Patent Application Publication Number 2006-0251897.

Example special effect compositions that may be used include pigments and/or compositions that produce one or more appearance effects such as reflectance, pearlescence, metallic sheen, phosphorescence, fluorescence, photochromism, photosensitivity, thermochromism, goniochromism and/or color-change. Additional special effect compositions can provide other perceptible properties, such as opacity or texture. In a non-limiting embodiment, special effect compositions can produce a color shift, such that the color of the coating changes when the coating is viewed at different angles. Example color effect compositions are identified in United States Patent Number 6,894,086. Additional color effect compositions can include transparent coated mica and/or synthetic mica, coated silica, coated alumina, a transparent liquid crystal pigment, a liquid crystal coating, and/or any composition wherein interference results from a refractive index differential within the material and not because of the refractive index differential between the surface of the material and the air.

In certain embodiments, a photosensitive composition and/or photochromic composition, which reversibly alters its color when exposed to one or more light sources, can be used in the coating of the present invention. Photochromic and/or photosensitive compositions can be activated by exposure to radiation of a specified wavelength. When the composition becomes excited, the molecular structure is changed and the altered structure exhibits a new color that is different from the original color of the composition. When the exposure to radiation is removed, the photochromic and/or photosensitive composition can return to a state of rest, in which the original color of the composition returns. In one non-limiting embodiment, the photochromic and/or photosensitive composition can be colorless in a non-excited state and exhibit a color in an excited state. Full color-change can appear within milliseconds to several minutes, such as from 20 seconds to 60 seconds. Example photochromic and/or photosensitive compositions include photochromic dyes.

In one embodiment, the photosensitive composition and/or photochromic composition can be associated with and/or at least partially bound to, such as by covalent bonding, a polymer and/or polymeric materials of a polymerizable component. In contrast to some coatings in which the photosensitive composition may migrate out of the coating and crystallize into the substrate, the photosensitive composition and/or photochromic composition associated with and/or at least partially bound to a polymer and/or polymerizable component in accordance with a non-limiting embodiment of the present invention, have minimal migration out of the coating. Example photosensitive compositions and/or photochromic compositions and methods for making them are identified in United States Application Serial Number 10/892,919 filed July 16, 2004.

In general, the colorant can be present in any amount sufficient to impart the desired visual and/or color effect. The colorant may comprise from 1 to 65 weight percent of the present compositions, such as from 3 to 40 weight percent or 5 to 35 weight percent, with weight percent based on the total weight of the compositions.

The present coating compositions can be applied to any substrates known in the art, for example automotive substrates and industrial substrates. These substrates can be, for example, metallic or non-metallic, including polymeric, plastic, polycarbonate, polycarbonate/acrylobutadiene styrene ("PC/ABS"), polyamide, wood, veneer, wood composite, particle board, medium density fiberboard, cement, stone, and the like. In a particularly suitable embodiment of the present invention, the substrate itself is biodegradable. Biodegradable substrates include, for example paper, wood and biodegradable plastics such as cellulose, poly(lactic acid), poly(3-hydroxybutyrate) and starch based plastics. In addition, the substrate can be one that has been recycled. The substrate can also be one that has already been treated in some manner to impart color and/or other visual effect. For example, a wood substrate that has been stained may then be coated according to the present invention, as can a substrate that has already had one or more other coating layers applied to it.

As used herein, the term "polyamide" in reference to a substrate means a substrate constructed from a polymer that includes repeating units of the formula: 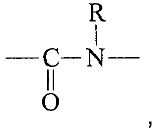 wherein R is hydrogen or an alkyl group. The polyamide may be any of a large class of polyamides based on aliphatic, cycloaliphatic, or aromatic groups in the chain. They may be formally represented by the products of condensation of a dibasic amine with a diacid and/or diacid chloride, by the product of selfcondensation of an amino acid, such as omega-aminoundecanoic acid, or by the product of a ring-opening reaction of a cyclic lactam, such as caprolactam, lauryllactam, or pyrrolidone. They may contain one or more alkylene, arylene, or aralkylene repeating units. The polyamide may be crystalline or amorphous. In certain embodiments, the polyamide substrate comprises a crystalline polyamide of alkylene repeating units having from 4 to 12 carbon atoms, such as poly(caprolactam), (nylon 6), poly(lauryllactam), (nylon 12), poly(omega-aminoundecanoic acid), (nylon 11), poly(hexamethylene adipamide), (nylon 6.6), poly(hexamethylene sebacamide), (nylon 6.10), and/or an alkylene/arylene copolyamide, such as that made from meta-xylylene diamine and adipic acid (nylon MXD6). The term "nylon" includes all of these products as well as any other compound referred to in the art as nylon. Amorphous polyamides, such as those derived from isophoronediamine or trimethylcyclohexanediamine, may also be utilized. Blends of polyamides may also be utilized.

As used herein, the term "polyamide", when used in reference to a substrate, includes a reinforced polyamide substrate; a reinforced polyamide substrate is a polyamide substrate constructed from a polyamide that has been reinforced through the inclusion of, for example, fibrous materials, such as glass fiber or carbon fiber, or inorganic fillers, such as calcium carbonate, to produce a polyamide having increased rigidity, strength, and/or heat resistance relative to a similar polyamide that does not include such reinforcing materials. Reinforced polyamides, which are suitable for use as a substrate material in accordance with certain embodiments of the present invention, are commercially available and include, for example, those materials commercially available from Solvay Advanced Polymers under the IXEF name and, include, for example, the IXEF 1000, 1500, 1600, 2000, 2500, 3000 and 5000 series products; from EMS-Chemie Inc., Sumter, South Carolina, under the GRILAMID, GRIVORY, GRILON and GRILFLEX tradenames; and DuPont Engineered Polymers, such as those sold under the THERMX and MINLON tradenames.

The coating compositions of the present invention can be applied by any means standard in the art, such as electrocoating, spraying, electrostatic spraying, dipping, rolling, brushing, and the like.

Coatings can be applied from the coating compositions of the present invention to any dry film thickness, such as 0.1 to 4 mils, 0.3 to 2 mils or 0.7 to 1.3 mils. The coatings of the present invention can be used alone, or in combination with one or more other coatings. For example, the coatings of the present invention can comprise a colorant or not and can be used as a primer, ecoat, basecoat, top coat, automotive repair coat, and the like. For substrates coated with multiple coatings, one or more of those coatings can be coatings as described herein. In certain embodiments, a basecoat containing the excess lactide reaction product may be used in conjunction with a clearcoat comprising the lactide reaction product; either or both the clearcoat or basecoat can further comprise a crosslinking agent.

Any numerical range recited herein is intended to include all subranges subsumed therein. Singular encompasses plural and vice versa. For example, although reference is made herein, including the claims, to "a" compound containing two or more active hydrogen groups, "a" lactide, "a" crosslinker, "a" lactide reaction product, "an" excess lactide reaction product, and the like, one or more of each of these and any other component can be used. "Including" means "including, but not limited to". As used herein, the term "polymer" refers to oligomers and both homopolymers and copolymers, and the prefix "poly" refers to two or more.

### EXAMPLES

The following examples are intended to illustrate the invention, and should not be construed as limiting the invention in any way.

### Example 1

**Soy polyol/lactide adduct - 1:2 OH:lactide ratio**

| | Component | Mass (/g) |
|---|---|---|
| 1 | BiOH 1560¹ | 102.49 |
| 2 | Toluene | 23.98 |
| 3 | DL-Lactide² | 122.17 |
| | | |
| 4 | Stanous octoate | 0.34 |
| 5 | Toluene | 1.02 |

| | | |
|---|---|---|
| ¹ Soy-based polyol, available from Cargill, Inc., hydroxyl value 232 mg KOH/g. ² Available from NatureWorks LLC. | | |

Components 1, 2 and 3 were charged to a flask fitted with a stirrer, nitrogen inlet, thermocouple and toluene filled Dean and Stark condenser. The mixture was raised to reflux, held for 15 minutes and then cooled to 80 °C. Components 4 and 5 were added and the temperature was increased to 125 °C and maintained for eight hours, solvent being drained from the Dean and Stark condenser if reflux occurred at a lower temperature. The reaction product had a solids content of 98.9% and a number average molecular weight of 2400.

### Example 2

**Soy polyol/lactide adduct -1:2 OH:lactide ratio**

| | Component | Mass (/g) |
|---|---|---|
| 1 | BiOH 1560 | 546.59 |
| 2 | Toluene | 127.87 |
| | | |
| 3 | DL-Lactide | 651.58 |
| 4 | Stanous octoate | 1.83 |
| 5 | Toluene | 5.47 |
| 6 | Methyl amyl ketone | 166.67 |

Components 1 and 2 were charged to a flask fitted with a stirrer, nitrogen inlet, thermocouple and toluene filled Dean and Stark condenser. The mixture was raised to reflux, held for 15 minutes and then cooled to 80°C. Components 3, 4 and 5 were added and the temperature was increased to 125°C and maintained for eight hours, solvent being drained from the Dean and Stark condenser if reflux occurred at a lower temperature. Component 6 was then added. The reaction product had a solids content of 82.1% and a number average molecular weight of 2550.

### Example 3

Two coating compositions for comparative purposes ("C1" and "C2") and one coating of the present invention ("present coating") were prepared using the ingredients and amounts (in grams) shown in Table 1. The samples were prepared as follows. All ingredients except isocyanate were weighed together in a 59 ml (2 oz) jar and shaken for 10 minutes to combine. The isocyanate was added and hand stirred until homogenous. The formulated paint was then applied to a cold rolled steel panel for property testing, and to aluminum panels for biodegradability and humidity testing. The application method was a draw down with a #58 wirewound coil bar. The panels were flashed at ambient temperature for 10 minutes and then baked for 30 minutes at 82 °C (180°F).

Panels were not tested until the next day. The final films were 55.9 µm to 68.6 µm (2.2 mils to 2.7 mils) in thickness. Table 1 also lists the results of hardness testing, humidity testing and the compost exposure results.

**Table 1**

| Material | C1 Coating | C2 Coating | Present Coating |
|---|---|---|---|
| TSAX 13-722 Acrylic⁴ | 14.71 | -- | -- |
| BiOH 1560 | -- | 8.33 | -- |
| Resin of example 1 | -- | -- | 11.07 |
| 10% DBTDL⁵ | 0.3 | 0.3 | 0.3 |
| Methyl ethyl ketone | 0.37 | 3.99 | 4.16 |
| DESMODUR N 3390A BA/SN⁶ | 4.63 | 7.39 | 4.47 |

| Testing | | | |
|---|---|---|---|
| Pencil Hardness (ASTM D3363) | H | 2B | HB |
| Humidity Resistance (ASTM D 1735) 1000 hrs⁷ | Minor haze, no blisters | Haze, microblisters | No haze, scattered microblisters |
| Compost Results (6 weeks)⁸ | Heavy yellow staining, no gloss loss | Heavy yellow staining, no gloss loss | Slight staining, severe whitening (recovers overnight). Some roughening and film loss. |
| Compost Results (13 weeks)⁸ | Heavy yellow staining, no gloss loss | Heavy yellow staining, no gloss loss | Slight staining, severe whitening (recovers overnight). Severe pitting. Softer. Film totally removed from some areas. |
| Poly(lactic acid) content⁹ | 0 | 0 | 39.7% |

| | | | |
|---|---|---|---|
| ⁴ Petroleum-based acrylic polyol, available from Nuplex Resins, LLC. ⁵ Dibutyl tin dilaurate solution (10% by weight in methyl amyl ketone). ⁶ Polymeric hexamethylene diisocyanate, 90% by weight in organic solvent, available from Bayer Material Science, LLC. ⁷ Blisters rated according to ASTM D714. Panels were not scribed. ⁸ Test panels were placed coated side up in a domestic compost bin, to which roughly equal volumes of vegetable scraps and dry leaves were added regularly together with enough water to keep the contents moist but not soggy. After the allotted time, the panels were removed, washed and assessed for changes against unexposed panels. ⁹ Theoretical percentage by weight of poly(lactic acid) segments in cured coating. | | | |

Coating compositions C1 and C2 containing the acrylic copolymer and the soy polyol show no evidence of biodegradability. The present coating composition (containing the lactide modified soy polyol) has similar hardness and humidity resistance to the acrylic standard, but shows evidence of biodegradation after composting.

### Example 4

A coating composition for comparative purposes ("C1") and a coating of the present invention ("present coating") were prepared using the ingredients and amounts (in grams) shown in Table 3. All ingredients except isocyanate were weighed together in a 59 ml (2 oz) jar and shaken for 10 minutes to combine. The isocyanate was added and hand stirred until homogenous. The formulated paint was then applied to a cold rolled steel panel. The application method was a draw down with a #58 wirewound coil bar. The panels were flashed at ambient temperature for 10 minutes and then baked for 30 minutes at 82°C (180°F).
The final films were 55.9 µm to 68.6 µm (2.2 mils to 2.7 mils) in thickness.

**Table 2**

| **Material** | **C1 Coating** | **Present Coating** |
|---|---|---|
| BiOH 1560 | 8.33 | -- |
| Resin of example 1 | -- | 11.07 |
| 10% Dibutyl tin dilaurate | 0.3 | 0.3 |
| Methyl ethyl ketone⁵ | 3.99 | 4.16 |
| DESMODUR N 3390A BA/SN⁶ | 7.39 | 4.47 |

| **Testing** | | |
|---|---|---|
| Pencil Hardness (ASTM D3363) | 2B | HB |
| MEK Resistance⁷ | Minor Scratches | Minor Scratches |

| | | |
|---|---|---|
| ⁵ 10 % by weight dibutyl tin dilaurate in methyl amyl ketone. ⁶ Polymeric Hexamethylene diisocyanate, 90% by weight in organic solvent, available from Bayer Material Science, LLC. ⁷ MEK soaked cotton swab rubbed 100 times (back and forth = 1 rub). | | |

These results demonstrate that replacement of a soy polyol with a lactide modified soy polyol leads to improved hardness in both isocyanate and melamine crosslinked coatings.

## Claims

1. A coating composition comprising
a) the reaction product of:
i) a compound containing two or more active hydrogen groups comprising a polyol, wherein the polyol comprises a biomass derived polyol having a hydroxyl value of 20 to 400 or soy polyol ; and
ii) a lactide; and
b) a crosslinker, wherein the crosslinker is present in the coating composition in an amount of 5 to 60 weight %, based on total solids weight of the coating.

2. The coating composition of any of the preceding claims, wherein the ratio by weight of i) to ii) is 1:>10 to 1:10,000 or 1:50 to 1:400.

3. The coating composition of any of the preceding claims, wherein the coating comprises ≥ 20 weight % or ≥ 32 weight % or ≥ 38 weight % poly (lactic acid) units, wherein weight % is based on the total solid weight of the coating.

4. The coating composition of any of the preceding claims, wherein the reaction product has a hydroxyl value of 40 to 350 or of 80 to 220.

5. The coating composition of any of the preceding claims, wherein the reaction product has a number average molecular weight, as determined by GPC ("Mn") of 750 to 10,000.

6. The coating composition of Claim 1, wherein the crosslinker comprises a polyisocyanate, a blocked polyisocyanate and/or a melamine formaldehyde.

7. The coating composition of any of claims 1 or 6, wherein the coating composition is a multi-component coating composition and a) is in a first component and b) is in a second component or wherein the coating composition is a one component coating composition.

8. The coating composition of any of the preceding claims further comprising:
c) an acrylic copolymer.

9. A substrate coated at least in part with a coating deposited from the coating composition of any of Claims 1-8.

10. The substrate of Claim 9, wherein the substrate is selected from metallic, non-metallic, polymeric, nylon and polycarbonate/acrylonitrile butadiene styrene (PC/ABS).

11. The substrate of Claim 9, wherein the substrate is biodegradable.

12. The substrate of any of Claims 9-11 comprising a multi-layer coating comprising a base coat and a clear coat, whereby the base coat and/or the clear boat is deposited from the coating composition of any of Claims 1 to8.

## Patentansprüche

1. Beschichtungszusammensetzung enthaltend
(a) das Reaktionsprodukt von:
(i) einer Verbindung, die zwei oder mehr aktive Wasserstoffgruppen enthält und ein Polyol umfasst, wobei das Polyol ein Polyol, das sich von Biomasse ableitet und eine Hydroxylwert von 20 bis 400 aufweist oder Sojapolyol umfasst, und
(ii) einem Lactid und
(b) einen Vernetzer, wobei der Vernetzer in der Beschichtungszusammensetzung in einer Menge von 5 bis 60 Gew.-%, bezogen auf das Gesamtfeststoffgewicht der Beschichtung, vorhanden ist.

2. Beschichtungszusammensetzung nach einem der vorstehenden Ansprüche, wobei das Gewichtsverhältnis von i) zu ii) 1:>10 bis 1:10.000 oder 1:50 bis 1:400 beträgt.

3. Beschichtungszusammensetzung nach einem der vorstehenden Ansprüche, wobei die Beschichtung ≥ 20 Gew.-% oder ≥ 32 Gew.-% oder ≥ 38 Gew.-% Poly(milchsäure)einheiten enthält, wobei die Gewichtsprozentangabe auf das Gesamtfeststoffgewicht der Beschichtung bezogen ist.

4. Beschichtungszusammensetzung nach einem der vorstehenden Ansprüche, wobei das Reaktionsprodukt einen Hydroxylwert von 40 bis 350 oder von 80 bis 220 aufweist.

5. Beschichtungszusammensetzung nach einem der vorstehenden Ansprüche, wobei das Reaktionsprodukt ein zahlenmittleres Molekulargewicht, bestimmt durch GPC ("Mn"), von 750 bis 10.000 aufweist.

6. Beschichtungszusammensetzung nach Anspruch 1, wobei der Vernetzer ein Polyisocyanat, ein blockiertes Polyisocyanat und/oder ein Melaminformaldehyd enthält.

7. Beschichtungszusammensetzung nach einem der Ansprüche 1 oder 6, wobei die Beschichtungszusammensetzung eine Mehrkomponentenbeschichtungszusammensetzung ist und a) in einer ersten Komponente und b) in einer zweiten Komponente vorhanden ist oder wobei die Beschichtungszusammensetzung eine Einkomponentenbeschichtungszusammensetzung ist.

8. Beschichtungszusammensetzung nach einem der vorstehenden Ansprüche, die zusätzlich c) ein Acrylcopolymer enthält.

9. Substrat, zumindest zum Teil beschichtet mit einer Beschichtung, die aus der Beschichtungszusammensetzung nach einem der Ansprüche 1 bis 8 abgeschieden ist.

10. Substrat nach Anspruch 9, wobei das Substrat ausgewählt ist aus einem metallischen, nichtmetallischen, polymeren, Nylon und Polycarbonat/Acrylnitril-Butadien-Styrol(PC/ABS)-Substrat ausgewählt ist.

11. Substrat nach Anspruch 9, wobei das Substrat biologisch abbaubar ist.

12. Substrat nach einem der Ansprüche 9 bis 11, das eine mehrschichtige Beschichtung aufweist, die einen Basislack und einen Klarlack enthält, wobei der Basislack und/oder der Klarlack aus der Zusammensetzung nach einem der Ansprüche 1 bis 8 abgeschieden ist.

## Revendications

1. Composition de revêtement comprenant :
a) le produit de réaction
i) d'un composé comportant deux groupes à atome d'hydrogène actif ou plus et comprenant un polyol, lequel polyol comprend un polyol dérivé de biomasse dont l'indice d'hydroxyle vaut de 20 à 400 ou un polyol de soja,
ii) et d'un lactide ;
b) et un agent de réticulation, lequel agent de réticulation se trouve présent dans la composition de revêtement en une proportion de 5 à 60 %, en poids rapporté au poids total des matières solides du revêtement.

2. Composition de revêtement conforme à la revendication précédente, dans laquelle le rapport en poids du constituant (i) au constituant (ii) vaut de 1/(plus de 10) à 1/10000, ou de 1/50 à 1/400.

3. Composition de revêtement conforme à l'une des revendications précédentes, avec laquelle le revêtement comprend 20 % en poids ou plus, ou 32 % en poids ou plus, ou 38 % en poids ou plus, de motifs de poly(acide lactique), étant entendu que ces pourcentages sont en poids rapporté au poids total des matières solides du revêtement.

4. Composition de revêtement conforme à l'une des revendications précédentes, dans laquelle le produit de réaction présente un indice d'hydroxyle valant de 40 à 350, ou de 80 à 220.

5. Composition de revêtement conforme à l'une des revendications précédentes, dans laquelle le produit de réaction présente une masse molaire moyenne en nombre Mn, déterminée par GPC, valant de 750 à 10 000.

6. Composition de revêtement conforme à la revendication 1, dans laquelle l'agent de réticulation comprend un polyisocyanate, un polyisocyanate bloqué et/ou un composé mélamine-formaldéhyde.

7. Composition de revêtement conforme à la revendication 1 ou 6, laquelle composition de revêtement est une composition de revêtement multi-composants où le constituant (a) est dans un premier composant et le constituant (b) est dans un deuxième composant, ou bien laquelle composition de revêtement est une composition de revêtement mono-composant.

8. Composition de revêtement conforme à l'une des revendications précédentes, qui comprend en outre :
c) un copolymère polyacrylique.

9. Substrat revêtu, au moins en partie, d'un revêtement formé, par dépôt, à partir d'une composition de revêtement conforme à l'une des revendications 1 à 8.

10. Substrat conforme à la revendication 9, lequel substrat est choisi parmi les substrats métalliques, non-métalliques, en polymère(s), en nylon, et en polycarbonate/poly(acrylonitrile-butadiène-styrène) (PC/ABS).

11. Substrat conforme à la revendication 9, lequel substrat est biodégradable.

12. Substrat conforme à l'une des revendications 9 à 11, comprenant un revêtement multicouche qui comporte une couche de base et une couche transparente et dans lequel la couche de base et/ou la couche transparente est ou sont formée(s), par dépôt, à partir d'une composition de revêtement conforme à l'une des revendications 1 à 8.
